# FASCICULE DE BREVET EUROPEEN

(11) **EP 1 441 986 B1**
(45) Date de publication et mention de la délivrance du brevet: **16.06.2010**
(21) Numéro de dépôt: 02783070.2
(22) Date de dépôt: 01.10.2002
(51) Int. Cl.: C01G 45/00, C01G 45/02

(54) **PROCEDE DE PREPARATION D'OXYDE MIXTE DE ZINC ET DE MANGANESE**
VERFAHREN ZUR HERSTELLUNG VON ZINK/MANGAN-MISCHOXIDEN
METHOD FOR PREPARING A MIXED ZINC AND MANGANESE OXIDE

(30) Priorité: 01.10.2001 BE 200100632
(43) Date de publication de la demande: 04.08.2004
(73) Titulaire: ERACHEM COMILOG, 1050 Brussels (BE)
(72) Inventeur: ROUSCHE, Jean-Claude, B-7050 Erbaut (BE); WILLAME, Michel, B-6280 Gerpinnes (BE); BINAME, Jean-Yves, B-7090 Braine-le-Conte (BE)
(74) Mandataire: Hirsch & Associés
(86) Numéro de dépôt international: PCT/EP2002/012280
(87) Numéro de publication internationale: WO 2003/029148

(56) Documents cités:
- EP-A- 0 620 607
- EP-A- 1 148 571
- US-A- 4 372 865

## Description

La présente invention concerne le domaine de la valorisation de solutions contenant du zinc et du manganèse, en particulier celles obtenues lors du traitement des déchets provenant des piles usagées.

Les piles sont des dispositifs capables de convertir l'énergie chimique en énergie électrique. Une pile comporte une cathode et une anode séparées par un électrolyte permettant le passage des ions entre les électrodes. Le choix du matériau des électrodes et de l'électrolyte est fonction du voltage et du courant que la pile sera amenée à fournir. Les composantes actives des piles sont logées dans une enveloppe qui les met à l'abri de l'air, empêche les fuites et procure une structure à l'ensemble.

On distingue les piles primaires des piles secondaires. Les piles primaires sont des piles destinées à être utilisées jusqu'à leur épuisement pour être ensuite jetées. Les piles secondaires par contre, aussi appelées accumulateurs, sont conçues pour permettre un rechargement et une réutilisation ultérieure.

Parmi les piles primaires les plus répandues figurent les piles fonctionnant sur la base du couple dioxyde de manganèse et zinc. Les piles appelées « salines » comprennent comme anode un godet en alliage à base de zinc comprenant du plomb et quelques additifs dont jusqu'il y a peu le mercure et le cadmium. L'électrolyte est constitué d'une solution de chlorure d'ammonium et/ou de chlorure de zinc. La cathode comprend une pâte à base de dioxyde de manganèse et de noir de carbone.

Une autre pile primaire courante à base de dioxyde de manganèse et de zinc est la pile alcaline qui se distingue de la précédente notamment par des matériaux d'électrode plus purs et par le fait que l'électrolyte est constitué d'hydroxyde de potassium.

La nature potentiellement dangereuse de ses composants, notamment les métaux lourds, rend la collecte et le traitement des piles usagées incontournable. La revalorisation des produits de ce traitement constitue alors un atout considérable pour rendre le recyclage de piles usagées industriellement et économiquement viable.

Pour les piles décrites sont valorisables notamment leurs constituants principaux, à savoir le manganèse et le zinc. Ces derniers offrent un débouché économique intéressant notamment comme matières premières dans la fabrication de ferrites doux.

On connaît des procédés de traitement de piles primaires avec récupération du manganèse et du zinc.

Les piles collectées sont en général d'abord triées afin d'éliminer par exemple les piles boutons et les accumulateurs nickel-cadmium. Les piles primaires, ainsi séparées, sont ensuite broyées afin de disloquer les enveloppes métalliques et d'en libérer leur contenu. De cette préparation sont ensuite séparés les métaux ferreux par voie magnétique. On élimine le plus souvent également les parties inertes telles que le plastique et le papier.

La boue minérale obtenue, appelée masse noire (« black mass » en anglais), constitue un produit intermédiaire important intervenant dans les procédés de recyclage des piles.

Plusieurs procédés de traitement de la masse noire ont été proposés. La plupart prévoient une étape de calcination conduisant à l'obtention d'oxydes.

Ainsi, EP 0761621 décrit un procédé de préparation de ferrites à partir de la black mass comprenant une étape de calcination à une température comprise entre 700 et 950°C.

EP-A-409792 décrit la préparation simultanée de dioxyde de manganèse et de zinc par électrolyse après calcination à 550°C sous atmosphère inerte.

De même, JP-60096734 décrit un procédé de traitement pour la récupération d'éléments valorisables à partir de piles usagées, dans lequel les piles sont d'abord broyées, puis chauffées à 500°C et ensuite soumises à un traitement chloro-ammoniacal, puis calcinées.

Ces procédés présentent comme inconvénient le fait que le traitement thermique génère des effluents gazeux toxiques (Hg, Cd). En outre, la calcination requiert une énergie considérable et rend les opérations longues et coûteuses. Enfin, le produit issu de ces procédés présente peu de valeur commerciale étant donné la quantité élevée d'impuretés qu'il contient.

Les procédés hydrométallurgiques, utilisant des réactions en solution aqueuse à basse température (∼100°C), sont plus adaptés au traitement sans transfert de pollution et à une meilleure valorisation des matériaux contenus dans les piles.

Un tel procédé est décrit dans EP 0 620 607. Ce document enseigne une mise en solution de la masse noire dans l'acide sulfurique (lixiviation) suivie d'une précipitation du mercure à un pH entre 2,5 et 4. Le zinc est ensuite séparé du manganèse par électrolyse. L'électrolyse requiert toutefois également une énergie considérable et un équipement coûteux. Par ailleurs, aucun des procédés permet l'élimination efficace et simple du nickel. Aussi, le tri initial des piles doit être rigoureux pour éviter la présence d'accumulateurs contenant des matériaux d'électrode à base de nickel.

EP-A-1148571, qui est un document au sens de l'article 54(3)(4), décrit un procédé pour le recyclage et la valorisation des piles salines et alcalines, comprenant notamment l'obtention d'une solution riche en sulfates de zinc et de manganèse, la purification de la solution comprenant l'ajustement du pH par H₂SO₄, la cémentation du cuivre, du cadmium, du mercure et du plomb par de la poudre de zinc et l'élimination des céments par filtration, et la complexation du nickel par l'éthylxanthate de sodium ou de potassium après réajustement du pH et son élimination par filtration. Ce document ne décrit pas la transformation de carbonate mixte de zinc et manganèse.

US-A-4372865 décrit la coprécipitation de fer et de métaux tels que zinc et manganèse par addition de carbonate et d'hydroxyde d'ammonium. Le coprécipité carbonate/hydroxyde de fer et des autres métaux est ensuite séché puis calciné en oxyde. Il n'est pas fait mention d'une étape de cémentation.

La présente invention a donc pour objet un procédé de préparation d'oxydes mixtes de manganèse et de zinc de mise en oeuvre simple et peu onéreux.

Le procédé selon l'invention permet l'obtention d'oxydes mixtes zinc-manganèse de composition stoechiométrique très large, du type ZnₓMn₃₋xO_{4+y} (0 < x ≤ 1.5 et -0.35 ≤ y ≤ 0.35). La préparation de l'oxyde mixte ZnMn₂O₄ est particulièrement intéressante car celui-ci peut être utilisé comme matière première pour la préparation de ferrites doux.

Selon l'invention, le procédé de préparation d'un oxyde mixte de zinc et de manganèse à partir d'une solution de sulfates de manganèse et de zinc, comprend les étapes de :
- cémentation par addition de zinc en milieu acide à partir de la température ambiante ;
- séparation du cément formé ;
- addition de carbonate ammonique ;
- séparation du carbonate mixte précipité ; et
- transformation du carbonate mixte en oxyde mixte.

Le procédé peut s'appliquer à diverses solutions contenant du manganèse et du zinc sous forme de sulfates, et notamment à des solutions de sulfates de zinc et de manganèse issues du traitement de piles usées. Ces solutions présentent l'inconvénient de contenir un certain nombre d'impuretés, dont des éléments alcalins et alcalino-terreux, de la silice et des métaux lourds.

Par ailleurs, le traitement chimique de la boue minérale habituellement réalisé par une lixiviation avec H₂SO₄ conduit à une pollution de l'oxyde mixte par l'anion sulfate. Or afin de valoriser les oxydes mixtes obtenus dans des applications telles que les ferrites doux, il est nécessaire d'atteindre un profil déterminé de valeurs requises. Pour l'application ferrites, ce profil est typiquement le suivant.

| | |
|---|---|
| Na₂O, K₂O < 300 ppm, | Cu, Co, Cr, Pb < 50 ppm |
| CaO, MgO < 1000 ppm | Ni < 300 ppm ; |
| Sₜₒₜₐₗ < 0.1 % | SiO₂ < 100 ppm |

Le ratio stoechiometrique entre le zinc et le manganèse est déterminant pour la composition de l'oxyde mixte que l'on obtiendra. Ainsi, afin d'obtenir l'oxyde mixte ZnMn_{z}O₄, on ajuste la teneur en manganèse et en zinc de la solution de sulfates obtenue à un ratio stoechiométrique de 2 avant l'addition du carbonate.

De préférence, l'étape de cémentation comprend deux étapes : une première cémentation par addition de zinc en excès molaire supérieur à 4 par rapport à la quantité de métaux à cémenter et
- une deuxième cémentation par addition de zinc en excès molaire inférieur à 4 par rapport à la quantité de métaux à cémenter.

Selon un mode de réalisation, l'excès molaire en zinc pendant la première cémentation est supérieur à 6 et de préférence à 7 et l'excès molaire en zinc pendant la deuxième cémentation est inférieure à 3 et de préférence à 2,5.

Avantageusement, la cémentation est réalisée à un pH inférieur à 5, de préférence compris entre 3.0 et 4,5.

De préférence, la première cémentation est réalisée à une température supérieure à 70°C, et de préférence entre 85 et 100°C.

La deuxième cémentation est réalisée à une température comprise entre 20 et 65°C, de préférence entre 45 et 65°C.

L'étape de précipitation est réalisée de préférence par addition de carbonate ammonique de manière à éviter la pollution du précipité par des éléments tels que, par exemple : Na, K, Ca, Mg. Selon un autre aspect de l'invention, le procédé comprend après séparation du carbonate mixte l'étape de précipitation du zinc et du manganèse résiduel contenu dans les eaux-mères par addition d'acide phosphorique puis d'acide sulfurique.

De préférence, l'étape de transformation du carbonate mixte zinc-manganèse en oxyde mixte est alors réalisée par calcination oxydante à une température comprise entre 400 et 900°C.

Selon un autre mode de réalisation, le procédé comprend en outre l'étape de lavage à l'eau de l'oxyde mixte zinc-manganèse obtenu.

Avantageusement, la solution de sulfates de manganèse et de zinc est obtenue par les étapes de :
- broyage des piles primaires ;
- séparation de la fraction magnétique ;
- séparation des matières plastiques et du papier et
- lixiviation de la masse noire obtenue à l'étape précédente à l'acide sulfurique.

Selon un mode de réalisation, la masse noire brute obtenue après séparation des matières plastiques et du papier est soumise, avant lixiviation, à un lavage alcalin suivi d'un lavage à l'eau.

Ce lavage a l'avantage de permettre l'élimination d'une grande partie des sels qui constituent l'électrolyte.

De préférence, la lixiviation est réalisée en présence d'un agent réducteur tel que l'eau oxygénée (H₂O₂), le dioxyde de soufre (SO₂) ou un mélange de gaz nitreux (NOₓ).

Selon un mode de réalisation, la solution de sulfates obtenue après lixiviation est ensuite soumise à une étape visant à séparer le fer et la silice.

De préférence, cette étape comprend l'ajustement du pH à une valeur comprise entre 4 et 5 à une température comprise entre l'ambiante et 95°C, de préférence entre 60 et 80°C, et le cas échéant en présence d'un agent floculant.

Selon un autre mode de réalisation, le procédé de préparation de l'oxyde mixte ZnMn₂O₄ est réalisé après ajustement du rapport molaire Mn/Zn = 2 de la solution de sulfates de manganèse et de zinc.

Un autre objet de l'invention concerne l'utilisation d'un oxyde mixte de zinc et de manganèse susceptible d'être obtenu selon l'une des revendications précédentes pour la préparation de ferrites doux.

Une application particulièrement avantageuse du procédé selon l'invention constitue le traitement et la valorisation de la masse noire obtenue lors du traitement de piles primaires. Dans ce qui suit, le procédé est expliqué plus en détail dans ce contexte. Il n'en reste pas moins que le procédé peut s'appliquer à des compositions similaires rencontrées dans des domaines différents.

Après séparation des métaux ferreux et des composantes inertes (papier, plastique), une masse noire contient typiquement environ 60 % en poids de manganèse, zinc et carbone ainsi qu'en quantité moindre des métaux non ferreux tels que par exemple : Hg, Cd, Cu et Ni, des métaux alcalins (Na, K) et alcalino-terreux (Ca, Mg), de la silice (SiO₂) et des sels solubles constituant l'électrolyte (NH₄Cl, ZnCl₂, KOH).

Un lavage de la masse noire au moyen d'une solution alcaline suivie d'un rinçage à l'eau permet d'extraire une grande partie des sels constituant l'électrolyte.

Après filtration, le manganèse et le zinc sont mis en solution par lixiviation.
Pour cela, on ajoute à la composition de l'acide sulfurique, de préférence en présence d'un agent réducteur tel H₂O₂. Des gaz tels SO₂ ou NOₓ peuvent aussi être utilisés à cette fin. Le carbone est alors séparé par filtration de la solution contenant les sulfates de manganèse, zinc et les autres métaux en association avec d'autres impuretés.

C'est une telle solution de sulfates que se propose de traiter en particulier le procédé selon l'invention.

Il s'agit alors d'éliminer de la solution les impuretés telles que le fer résiduel, le mercure, le nickel, le cuivre, le cadmium, les alcalins et alcalino-terreux et la silice.

La première étape originale du procédé selon l'invention sert à séparer les métaux moins électropositifs que le zinc, à savoir le cuivre, le cadmium, le mercure et le nickel par cémentation à la poudre de zinc.

Une autre étape originale du procédé consiste à séparer les 2 principaux éléments valorisables, le Zn et le Mn, en les précipitant sous forme d'un carbonate mixte. Le solide est séparé, puis transformé en oxyde mixte. Après lavage, on obtient un oxyde mixte de manganèse et de zinc de formule ZnMn₂O₄ suffisamment pur pour être vendu comme matière première pour la production de ferrites doux.

L'invention sera décrite plus en détail au moyen des exemples suivants.

On décrit tout d'abord les conditions d'obtention d'une solution de sulfate à partir de masse noire provenant du traitement de piles primaires usagées.

La masse noire est essentiellement constituée de bioxyde de manganèse plus
ou moins réduit et de zinc. Sa composition dépend de la proportion piles salines/piles alcalines du lot à traiter ; généralement, on a avant lavage :

| | |
|---|---|
| Mn= 24-28% | K= 0.6-4.0% |
| MnO₂ = 20 - 25 % | Ni = environ 1000 ppm |
| Carbone = 10 % | Cl = 1.5 - 3.0 % Cu = environ 300 ppm |
| Fe = 0.2 - 0.6 % | Hg = 500 - 1000 ppm |

Le lavage est une étape optionnelle qui permet d'éliminer les sels solubles, c'est-à-dire une grande partie des chlorures de potassium, de sodium et d'ammonium.

La lixiviation sulfurique est réalisée sur une pulpe aqueuse de masse noire agitée. En partant de la température ambiante, on ajoute lentement du H₂SO₄ à 96 % pour atteindre un pH d'environ 1. La réaction est exothermique en raison de la réaction du zinc avec H₂SO₄.

La lixiviation en milieu sulfurique ne permet cependant pas de récupérer l'intégralité du manganèse. En effet, la masse noire contient en général du manganèse tétravalent, insoluble dans ce milieu. Afin de mettre en solution la totalité du manganèse, on peut terminer la lixiviation en présence d'un agent réducteur tel que le dioxyde de soufre(SO₂), le fer ferreux (Fe²⁺), l'eau oxygénée (H₂O₂), pour récupérer dans ce cas une solution de sulfate mixte Zinc-Manganèse.

La lixiviation peut aussi être ainsi conduite en milieu HNO₃ en présence de gaz nitreux (NOₓ) comme agent réducteur. Dans ce cas, une solution de nitrate mixte de zinc et de manganèse est obtenue.

### Exemple 1 : Lixiviation de masse noire non lavée

400 kg de masse noire non lavée (cf. tableau 2) sont agités dans 850 litres d'eau à température ambiante et on ajoute H₂SO₄ pour atteindre un pH de 1.

L'évolution du pH, de la température du milieu réactionnel et de la teneur en chlorures, manganèse et zinc en solution est reprise dans le tableau 1 ci-après :

**Tableau 1**

| **Durée** | **pH** | **T [°C]** | **Cl [g/l]** | **Mn [g/l]** | **Zn[g/l]** |
|---|---|---|---|---|---|
| 0 | 9.0 | 21 | n.d. | 0.0 | 0.0 |
| 1 h | 4.2 | 30 | n.d. | 2.8 | 24.1 |
| 1 h 30 | 3.5 | 41 | n.d. | 7.1 | 40.3 |
| 2 h | 3.0 | 53 | n.d. | 12.7 | 60.8 |
| 2 h 30 | 2.6 | 64 | n.d. | 19.8 | 68.0 |
| 3 h 30 | 2.0 | 75 | 9.7 | 31.7 | 82.6 |
| 4 h 30 | 1.4 | 82 | n.d. | 43.0 | 94.0 |
| 5 h | 1.0 | 82 | n.d. | n.d. | n.d. |
| 5 h 30 | 1.0 | 80 | n.d. | 47.3 | 94.8 |
| 6 h | 1.0 | 78 | 8.7 | 48.0 | 95.3 |
| 7 h | 0.8 | 74 | 8.4 | 48.0 | 95.0 |
| 8 h | 0.6 | 73 | 8.4 | 49.0 | 94.1 |

| | | | | | |
|---|---|---|---|---|---|
| n.d. : non dosé | | | | | |

L'attaque du zinc est rapide à des pH supérieurs à 3 ; toutefois, du manganèse se dissout également, rendant impossible une lixiviation fractionnée.

On constate qu'un séjour prolongé de la pulpe entre pH = 0.8 et 0.6 n'augmente pas les concentrations en Zn et en Mn de manière significative.

Le tableau 2 ci-dessous reprend les compositions des eaux mères (EM) et des résidus (MnO₂ + carbone) après un séjour d'une heure aux pH 1, 0.8 et 0.6. On peut constater que la teneur en zinc résiduel reste supérieure à 1 % dans le résidu MnO₂/C, même après un séjour d'une heure à pH = 0,6 et plus de 70°C. Par contre, la teneur en chlorure baisse considérablement lorsqu'on passe de pH = 0.8 à 0.6, ce qui est probablement dû à la réaction entre le MnO₂ et les chlorures en milieu acide. La teneur en mercure ne semble pas dépendre du pH, elle est d'environ 800 ppm dans le résidu et d'environ 200 mg/l dans la solution de sulfate mixte Mn-Zn. Cette même solution contient beaucoup de potassium et de chlorures si on lixivie une masse noire non lavée.

**Tableau 2**

| | **B.M. (%)** | **EM pH 1 [g/l]** | **EM PH 0.8 [g/l]** | **EM pH 0.6 [g/l]** | **Résidu pH 1 [%]** | **Résidu pH 0.8 [%]** | **Résidu pH 0.6 [%]** |
|---|---|---|---|---|---|---|---|
| Mn | 24.70 | 48.0 | 48.0 | 49 | 41.7 | 39.7 | 39.00 |
| Cl | 1.98 | 8.65 | 8.36 | 8.36 | 0.18 | 0.17 | 0.04 |
| Ctot. | 9.95 | s.o. | s.o. | s.o. | 26.5 | 24.0 | 28.1 |
| Fe | 0.25 | 0.97 | 1.19 | 1.37 | 1.84 | 1.82 | 1.56 |
| Zn | 18.75 | 95.3 | 95.0 | 94.1 | 3.20 | 1.95 | 1.30 |
| K | 3.75 | 10.00 | 8.70 | 13.80 | 0.320 | 0.74 | 1.37 |
| Ni | 0.14 | 0.86 | 0.84 | 0.85 | 0.01 | 0.07 | 0.04 |
| Cu | 0.022 | 0.220 | 0.230 | 0.240 | 0.010 | 0.012 | 0.010 |
| Co | 0.004 | 0.002 | 0.002 | 0.002 | 0.003 | 0.029 | 0.024 |
| Pb | 0.090 | 0.001 | 0.001 | 0.001 | 0.081 | 0.073 | 0.069 |
| Cr | n.d. | n.d. | n.d. | n.d. | 0.002 | 0.0013 | 0.0011 |
| Hg | 0.075 | 0.197 | 0.200 | 0.220 | 0.075 | 0.085 | 0.090 |

| | | | | | | | |
|---|---|---|---|---|---|---|---|
| n.d. = non dosé s.o. = sans objet | | | | | | | |

### Exemple 2 : Lixiviation de masse noire lavée

Une masse noire brute contenant :

| | | | |
|---|---|---|---|
| Mn = 28.2 % | MnO₂ = 25.9 % | Zn=21.2% | K = 3.40 % |
| Cl⁻ = 2.75 % | Fe = 0.53 % | Cd = 0.12 % | Ni = 675 ppm |
| Hg = 675 ppm | Cu = 225 ppm | Pb = 150 ppm | Co = 50 ppm |

est soumise à un lavage en milieu légèrement alcalin comme indiqué ci-après :

On ajoute 1 kg de masse noire brute dans 3 litres d'eau contenant 12 g/l de soude. L'opération dure 2 h et se déroule à 95°C. Après filtration et lavage avec 2 litres d'eau, on récupère 916,7 grammes de masse noire lavée contenant :

| | | | |
|---|---|---|---|
| Mn=31.3% | Zn=24.5% | K=0.37% | |
| Cl⁻= 885 ppm | Fe = 600 ppm | Cd = 550 ppm | Ni =150 ppm |
| Hg = 525 ppm | Cu = 275 ppm | Co = 25 ppm | |

A une pulpe aqueuse contenant 850 g de masse noire lavée dans 1.2751 d'eau, on ajoute lentement une solution contenant 914 g de H₂SO₄ à 95 % dilué dans 850 ml d'eau. On chauffe la pulpe jusqu'à 85°C. Lorsque le pH du milieu réactionnel chute à 1,5, on filtre la pulpe résultante et on lave le gâteau trois fois avec 500 ml d'eau. On obtient 2,225 1 d'eau mère et 380 g de résidu dont la composition est reprise dans le Tableau 3.

**Tableau 3**

| | **EM [g/l]** | **EL 1 [g/l]** | **EL 2 [g/l]** | **EL 3 [g/l]** | **Résidu [%]** |
|---|---|---|---|---|---|
| Mn | 47.0 | 8.1 | 1.0 | 0.1 | 40.0 |
| Zn | 86.6 | 14.0 | 1.8 | 0.2 | 0.4 |
| Cl⁻ | 0.022 | 0.012 | 0.007 | 0.004 | 0.004 |
| K | 1.000 | 0.162 | 0.105 | 0.041 | 0.176 |
| Fe | 1.13 | 0.041 | 0.004 | <0.001 | 0.87 |
| Cu | 0.160 | 0.030 | 0.004 | <0.001 | <0.001 |
| Co | 0.103 | 0.002 | <0.001 | n.d. | n.d. |
| Hg | 0.196 | 0.040 | 0.048 | 0.014 | 0.045 |
| Pb | 0.0003 | 0.0001 | n.d. | n.d. | 0.099 |
| Cd | 0.500 | 0.075 | 0.009 | 0.001 | 0.004 |

| | | | | | |
|---|---|---|---|---|---|
| EM = eau mère EL = eau de lavage | | | | | |

Les résultats d'analyse de l'eau mère (EM), des eaux de lavage (EL) ainsi que du résidu sont consignés dans le tableau 3 ci-dessus. On peut constater à partir du bilan matière (cf.tableau 4) que la réalisation de trois lavages permet de récupérer la quasi intégralité du Mn et du Zn solubles. La combinaison des eaux de lavage avec les eaux-mères fournit une solution de sulfate mixte Zn-Mn contenant 29.5 g/l en Mn et 54.22 g/l en zinc.

**Tableau 4**

| | **Mis en oeuvre** | **EM + EL (1+2+3)** | **Résidu** | **Total** |
|---|---|---|---|---|
| Mn | 266.1 g | 109.2 g | 152.0 g | 261.2 g (98 %) |
| Zn | 208.2 g | 200.6 g | 1.4 g | 202.0 g (97 %) |

### Exemple 3 : lixiviation en présence de H₂O₂

Afin d'éviter un résidu à forte teneur en manganèse, on opérera comme pour les exemples 1 et 2 au départ mais en terminant la lixiviation en présence d'H₂O₂.

En effet, dans ces conditions, l'eau oxygénée est réductrice vis-à-vis du manganèse tétravalent et permet de récupérer l'intégralité du manganèse contenu dans la masse noire sous forme de sulfate de manganèse.

On utilisera de préférence une solution de H₂O₂ à 30 % (soit 358 g/l) et la réduction sera suivie par mesure du potentiel redox. Ce potentiel s'élève à 600 mV dans une pulpe MnSO₄ - MnO₂ - H₂SO₄ en présence de traces d'H₂O₂ et à plus de 1000 mV en absence de H₂O₂.

Lors de la lixiviation d'une masse noire contenant 27.8 % de Mn, 19.5 % de MnO₂ et 26.3 % de zinc, on utilise un excès d'H₂O₂ de 17 % par rapport à la teneur en MnO₂ pour extraire plus de 90 % (93.3 %) du manganèse total. Le résidu contient alors seulement 10.3 % de Mn et 0.5 % de zinc.

En augmentant l'excès d'H₂O₂ jusque 57 %, la lixiviation permet de mettre en solution plus de 99 % du Mn et le résidu contient 5 % de Mn et 0.25 % de zinc.

Toutefois, on observe avec le H₂O₂ la formation d'une importante couche de mousse. Aussi, est-il préférable d'ajouter le réactif lentement et à température ambiante et/ou d'utiliser un agent anti-mousse. La durée totale de la lixiviation peut alors être limitée à moins de 10 heures.

### Exemple 4 : Lixiviation avec du dioxyde de soufre (SO₂)

L'utilisation de dioxyde de soufre comme agent réducteur évite la formation de mousses et diminue considérablement la durée de la lixiviation.

Une masse noire contenant :

| | | | |
|---|---|---|---|
| Mn = 27.8 % | MnO₂ = 19.5 % | Zn = 26.32 % | Cl = 1.53 % |
| K = 0.6 % | Fe = 0.58 % | Ca =1837 ppm | Ni = 868 ppm |
| Na = 779 ppm | Hg = 555 ppm | Cu = 272 ppm | Mg =150 ppm |
| Pb = 85 ppm | Co = 74 ppm | | |

est soumise à une lixiviation dans les conditions décrites dans les exemples précédents. On lixivie 200 g de masse noire dans 300 ml d'eau jusque pH = 1 avec une solution de H₂SO₄ (215 g à 94 % dans 200 ml d'H₂O). La température du milieu réactionnel atteint 70°C et on fait ensuite passer du SO₂ à travers la suspension pendant deux heures, puis on chauffe à 95°C. On laisse ensuite refroidir à la température ambiante, puis on filtre. On récupère 1311 g de solution de sulfate mixte zinc-manganèse de densité 1,024 g/cm3 et 16.2 g de résidu dont les analyses sont reprises dans le tableau 5 ci-dessous. Le bilan matière (cf. tableau 6) fait apparaître que la quasi-totalité du manganèse est récupérée dans la solution.

**Tableau 5**

| | **EM+EL [g/l]** | **Résidu [%]** |
|---|---|---|
| Mn | 54.53 | 0.21 |
| Zn | 49.86 | 0.10 |
| Cl | 1.96 | 0.022 |
| K | 1.19 | 0.04 |
| Fe | 2.86 | 0.05 |
| Hg | 0.054 | 0.086 |

**Tableau 6**

| | **Mis en oeuvre** | **EM + EL** | **Résidu** | **Somme** |
|---|---|---|---|---|
| Mn | 55.6 g | 55.6 g | ∼ 0 g | 55.6 g (100%) |
| Zn | 52.6 g | 50.8 g | ∼ 0 g | 50.8 g (96.5%) |

### Exemple 5 : lixiviation avec un mélange de gaz nitreux (NO+NO₂)

Au lieu du dioxyde de soufre, il s'avère parfaitement possible d'utiliser un mélange de gaz nitreux en milieu HNO₃ comme agent réducteur vis-à-vis du résidu (MnO₂ + Carbone).
On utilise une masse noire non lavée contenant 31.6 % en manganèse total, 20.0 % en MnO₂ et 28.3 % en zinc. 200 g de masse noire sont mises en suspension dans un litre d'eau ; on chauffe vers 50°C et on injecte lentement du gaz nitreux pendant 10 h, jusqu'à ce que le pH retombe à 2.6. On amène ensuite à pH 1 avec quelques gouttes d'HNO₃ à 65%.
On récupère un résidu contenant 0.8 % de manganèse, 0.3 % de zinc et 2694 ppm de Hg. La solution de nitrate mixte contient 37.6 g/l en manganèse, 31.5 g/l en zinc et 42 mg/l de Hg.

### Exemple 6 : Elimination du fer et de la silice

La solution issue de la lixiviation acide peut être débarrassée du fer par addition de NH₄OH jusqu'à un pH faiblement acide comme indiqué ci-après.
On neutralise 8 litres de solution de sulfate mixte de Zn et de Mn (contenant par ailleurs 1.37 g/l de Fer) en ajoutant 375 ml NH₄OH à 25 % ; le pH final s'élève à environ 5.0 et on chauffe à 70°C pour floculer l'oxyde de fer en présence d'un agent floculant (Magnafloc 333 disponible auprès de Allied Colloid, solution à 0.1 %). Après filtration, la solution contient moins de 1 mg/l de fer et moins de 20 mg/l en silice.

La solution peut alors être cémentée à la poudre de zinc pour éliminer Cd, Cu, Pb, Ni et également Hg selon la procédure décrite dans les exemples 7 et 8.

### Exemple 7 : Cémentation

Soit une solution de sulfate mixte Zn-Mn contenant les impuretés suivantes :

| | | | | |
|---|---|---|---|---|
| Cu = 0.095 g/l | Cd =1.164 g/l | Hg = 0.023 g/l | Co = 0.084 g/l | Ni = 2.5 g/l. |

A un litre de solution, on ajoute 5.39 g de poudre de Zn, soit quatre fois la stoechiométrie par rapport aux éléments Cu, Cd, Hg, Co et Ni. On agite une heure à la température ambiante en maintenant le pH entre 3.9 et 4.3 avec 5 ml d'H₂SO₄ à 40 %. Après filtration, la solution cémentée contient :

| | | | |
|---|---|---|---|
| Cu = 0.002 g/l | Cd = <0.001 g/l | Hg = 0.001 g/l | Co = 0.085 g/l |
| Ni = 2.164 g/l. | | | |

On constate que les impuretés sont facilement éliminées par cémentation sauf le nickel. Il est cependant possible de l'éliminer en travaillant en deux étapes et à température plus élevée comme décrit dans l'exemple suivant.

### Exemple 8 : Cémentation en deux étapes

La solution selon l'exemple 7 est portée et maintenue à 95°C puis on ajoute en continu et pendant une heure la poudre de Zn à raison de sept fois la stoechiométrie par rapport aux éléments à éliminer (Ni, Cd, Cu, Hg, Co). Le pH est réglé entre 4.2 et 4.4 avec une solution de H₂SO₄ (solution à 40 %) Ceci constitue la première étape de la cémentation.

Afin de réduire encore d'avantage la teneur en nickel, on peut ajouter une deuxième étape de cémentation. On refroidit alors la solution à 65°C en 1h30 et on ajoute alors en continu de la poudre de Zn pendant 30 minutes à raison de 2.5 fois la stoechiométrie par rapport aux éléments à éliminer. Le pH est toujours maintenu entre 4.2 et 4.4 avec H₂SO₄.

On obtient alors les solutions épurées suivantes :

| | | | |
|---|---|---|---|
| Etape 1 : | Ni = 0.050 g/l | Cd < 0.001 g/l | Co = 0.031 g/l |
| Etape 2 : | Ni = 0.015 g/l | Cd = non détectable | Co = 0.023 g/l |

L'utilisation de ces conditions expérimentales permettent d'éliminer totalement les métaux tels que Cu, Hg, Cd et au minimum 70 % du nickel.

### Exemple 9 : Préparation du carbonate mixte Zn/Mn à l'échelle laboratoire

La solution de sulfate mixte de zinc et manganèse ainsi purifiée peut être traitée par une solution de carbonate ammonique pour récupérer un carbonate mixte.
a) Soit une solution de sulfate mixte contenant 30 g/l de manganèse et 60 g/l de zinc. Dans un bêcher contenant 500 ml d'eau, on ajoute simultanément 1 litre d'une solution (NH₄)₂CO₃ à 170 g/l et 950 ml de la solution de sulfate mixte tout en maintenant le pH du milieu réactionnel autour de 7.4 - 7.5. En fin d'ajout, le pH chute à 7 et remonte ensuite à 7.9 après 2h30. On filtre et récupère 168 g de carbonate mixte contenant :

| | | |
|---|---|---|
| Mn = 16.7 % | Zn = 35.3 % | CO₂ = 31.84 % |

Les eaux-mères ne contiennent que 4 mg/l de manganèse et 16 mg/l de zinc.

**Tableau 7 : Bilan matière**

| | **Mis en oeuvre** | **Carbonate mixte** | **(EM+EL)** | **Somme (%)** |
|---|---|---|---|---|
| Mn | 28.50 g | 28.6**0**g* | ∼ 0 | 28.60 g (100.4 %) |
| Zn | 57.00 g | 59.30 g* | ∼ 0 | 59.30 g (104 %) |

| | | | | |
|---|---|---|---|---|
| * Valeur déterminée par analyse | | | | |

b) On procède de la même façon en partant de 4.8 litres d'une solution de sulfate mixte contenant 320 g de Zn et 536 g de Mn et 5 litres d'une solution contenant 310 g/l de (NH₄)CO₃. On récupère 1727 g de carbonate mixte contenant :

| | | | |
|---|---|---|---|
| Mn = 29.5 % | Zn = 20.1 % | CO₂ = 34.65 % | SO₄ = 0.827 % |

Les eaux-mères ne contiennent plus que 4 mg/l de zinc et 46 mg/l de manganèse.

### Exemple 10 : Préparation du carbonate mixte Zn/Mn à l'échelle industrielle

La solution de sulfate mixte Zn-Mn est amenée vers pH = 5.0. Cela permet non seulement l'élimination du fer, mais aussi d'abaisser le teneur en silice à moins de 20 mg/l.

La première colonne du tableau 8 ci-dessous donne la composition moyenne de la solution de sulfate mixte Zn-Mn initiale, obtenue par lixiviation d'une masse noire à l'acide sulfurique et cémentations selon les étapes suivantes :
- Ajustement du pH de la solution à 4.2 avec H₂SO₄ à 60 % ;
- Première cémentation à 95°C à la poudre de zinc, à pH maintenu inférieur à 5 ;
- Refroidissement de 95°C à 65°C en 1 heure ;
- Deuxième cémentation à 65 °C à la poudre de zinc, à pH maintenu inférieur à 5 ; et
- Filtration de la solution cémentée.

Les deuxième et troisième colonnes du tableau 8 rassemblent les données analytiques de la solution de sulfate mixte après chaque étape de cémentation. Pour le traitement subséquent de la solution, la solution de sulfate mixte Zn-Mn ainsi purifiée est enrichie en manganèse pour aboutir à un rapport molaire Mn/Zn de 2. La composition de cette solution appelée « Réajustée » figure aussi dans le tableau 8.

**Tableau 8**

| | **Initial** | **Cémentation 1** | **Cémentation 2** | **Réajustée** |
|---|---|---|---|---|
| Mn [g/l] | 56.0 | 58.2 | 60.4 | 70.3 |
| Zn [g/l] | 49.7 | 52.8 | 50.0 | 41.7 |
| Dté [g/cm³] | 1.27 | 1.28 | 1.28 | 1.28 |
| K [g/l] | 0.07 | n.d. | n.d. | n.d. |
| Na [g/l] | 0.40 | n.d. | n.d. | n.d. |
| Mg [g/l] | 0.20 | n.d. | n.d. | n.d. |
| Ca [g/l] | 0.58 | n.d. | n.d. | n.d. |
| Fe [g/l] | 0.001 | n.d. | n.d. | n.d. |
| Al [g/l] | 0.002 | n.d. | n.d. | n.d. |
| Ni [g/l] | 0.140 | 0.050 | 0.050 | 0.040 |
| Cd [g/l] | 0.120 | 0.001 | 0.001 | 0.001 |
| Cu (g/l) | 0.020 | 0.001 | 0.001 | 0.001 |
| Co g/l) | 0.010 | n.d. | n.d. | n.d. |
| Hg (g/l) | 0.040 | 0.001 | 0.001 | 0.001 |
| SiO₂ (g/l) | 0.020 | n.d. | n.d. | n.d. |
| As (g/l) | 0.001 | n.d. | n.d. | n.d. |
| Sb (g/l) | 0.001 | n.d. | n.d. | n.d. |

| | | | | |
|---|---|---|---|---|
| n.d. : non dosé | | | | |

On alimente ensuite en continu un réacteur (40 m³) avec la solution de sulfate mixte épurée et une solution de carbonate ammonique ; les débits utilisés sont de 4.8 m³/h pour le sulfate mixte et de 4.5 m³/h pour le carbonate ammonique.

La précipitation se déroule à la température ambiante et le ratio sulfate mixte-carbonate ammonique peut être ajusté de façon à maintenir un excès d'ammoniac libre d'environ 5 g/l dans les eaux mères.

Le tableau 9 ci-dessous donne les caractéristiques physico-chimiques de quatre échantillons de carbonate mixte prélevés durant la précipitation :

**Tableau 9**

| | **Echantillon 1** | **Echantillon 2** | **Echantillon 3** | **Echantillon 4** |
|---|---|---|---|---|
| Mn (%) | 29.5 | 29.8 | 30.0 | 29.6 |
| Zn (%) | 17.5 | 17.5 | 17.4 | 17.5 |
| CO₂ (%) | 33.6 | 34.4 | 34.1 | 34.1 |
| NH₃ (%) | 1.1 | 1.0 | 0.9 | 1.0 |
| S (%) | 0.59 | 0.60 | 0.58 | 0.60 |
| K₂O (ppm) | 45 | 50 | 55 | 45 |
| Na₂O (ppm) | 1085 | 1135 | 1150 | 1140 |
| MgO (ppm) | 170 | 175 | 175 | 155 |
| CaO (ppm) | 2530 | 2645 | 2745 | 2635 |
| BaO (ppm) | <5 | <5 | <5 | <5 |
| SrO (ppm) | <15 | <15 | <15 | <15 |
| Ni (ppm) | 75 | 65 | 66 | 69 |
| Cu (ppm) | 1 | 1 | 1 | 1 |
| Co (ppm) | 33 | 33 | 33 | 32 |
| Fe (ppm) | 13 | 11 | 11 | 27 |
| Pb (ppm) | 1 | 1 | 1 | 1 |
| Cd (ppm) | 28 | 28 | 29 | 28 |
| Hg (ppm) | 1 | 1 | 1 | 1 |
| As (ppm) | 1 | 1 | 1 | 1 |
| Sb (ppm) | 1 | 1 | 1 | 1 |
| SiO₂ (ppm) | 57 | 54 | 51 | 54 |
| H₂O 120°C (%) | 2.16 | 1.91 | 1.74 | 2.12 |
| DT (g/cm³) | 1.820 | 1.942 | 1.910 | 1.850 |
| DNT (g/cm³) | 1.470 | 1.540 | 1.490 | 1.520 |
| SSA (m²/g) | 51.4 | 27.6 | 15.8 | 27.2 |
| Porosité (cm³/g) | 0.06 | 0.06 | 0.06 | 0.05 |
| d₅₀ (µm) | 49.6 | 44 | 42.1 | 48.2 |

| | | | | |
|---|---|---|---|---|
| DT = densité tassée DNT = densité non tassée S.S.A. = Surface Spécifique d₅₀ = diamètre moyen des particules. H₂O 120°C : eau libre à 120°C. | | | | |

Après filtration du carbonate mixte, les eaux mères contiennent principalement du sulfate ammonique (NH₄)₂SO₄ ainsi qu'environ 400 mg/l de Zn et 200 mg/l de Mn résiduels.

Ces éléments peuvent être éliminés sous forme de phosphates insolubles en procédant comme suit. On ajoute de l'acide phosphorique à raison de deux fois la quantité stoechiométrique pour former les phosphates ZnNH₄PO₄ et MnNH₄PO₄ insolubles, puis de l'acide sulfurique jusque pH 7 ; après environ 30 minutes, les eaux mères ne contiennent plus que 5 à 10 mg/l en Zn et en Mn.

Après filtration, la solution résultante peut être concentrée pour fournir du (NH₄)₂SO₄ sous forme cristalline. Ce composé est valorisable par exemple comme fertilisant en agrochimie.

### Exemple 11 : Préparation de l'oxyde mixte ZnMn₂O₄ à échelle industrielle

Le carbonate mixte filtré tel qu'obtenu selon l'exemple 10 est soumis à un grillage dans un four rotatif en vue de le convertir en manganite de zinc, ZnMn₂O₄. Cette opération est réalisée à une température « produit » d'au moins 400°C et sous courant d'air avec un débit d'alimentation de carbonate mixte de l'ordre de 700 kg/h.

Un lavage aqueux du ZnMn₂O₄ obtenu, à raison de 25 litres par kg d'oxyde, permet d'abaisser considérablement la teneur en éléments alcalins et alcalino-terreux, des impuretés nuisibles en particulier dans le cas d'une application dans le domaine des ferrites doux Le ZnMn₂O₄ lavé est séché par séchage flash.

Le tableau 10 ci-dessous reprend les caractéristiques physico-chimiques du ZnMn₂O₄ lavé et non lavé. La comparaison des analyses montre clairement l'effet bénéfique du traitement thermique suivi du lavage, particulièrement en ce qui concerne la réduction des impuretés faisant partie du groupe des métaux alcalins et alcalino-terreux.

Ainsi, le procédé décrit permet la purification de solutions de sulfates de zinc et de manganèse contenant des impuretés, notamment du nickel et des métaux lourds. Il permet également la préparation à partir de ces solutions d'oxydes mixtes de zinc et de manganèse. Ce procédé est particulièrement avantageux lorsqu'il est appliqué au traitement de piles primaires usagées. L'oxyde mixte de manganèse et de zinc obtenu est suffisamment pur pour être valorisé, par exemple dans l'industrie des ferrites doux. Le procédé de traitement des piles primaires usagées est en outre moins sensible à la présence de piles Ni-Cd ou de piles boutons. Il permet par ailleurs une récupération quasi totale du manganèse et du zinc contenu dans la masse noire.

Cependant, ce procédé saura également trouver application dans d'autres domaines industriels dès lors qu'il s'agit de purifier des solutions de sulfates de manganèse et de zinc contenant notamment des métaux lourds et/ou de valoriser le manganèse et de zinc contenus notamment sous la forme de leur oxyde mixte.

**Tableau 10**

| | **ZnMn₂O₄ non lavé** | **ZnMn₂O₄ lavé** |
|---|---|---|
| Mn (%) | 44.9 | 46.4 |
| MnO₂ (%) | 35.6 | 36.0 |
| O/Mn | 1.50 | 1.49 |
| Zn (%) | 27.6 | 26.9 |
| K₂O (ppm) | 75 | 45 |
| Na₂O (ppm) | 1685 | 75 |
| MgO (ppm) | 255 | 130 |
| CaO (ppm) | 4235 | 90 |
| BaO (ppm) | <5 | <5 |
| SrO (ppm) | 25 | <5 |
| Ni (ppm) | 102 | 118 |
| Cu (ppm) | 1 | 1 |
| Co (ppm) | 52 | 55 |
| Pb (ppm) | 1 | 1 |
| Cd (ppm) | 44 | 29 |
| Hg (ppm) | 1 | 1 |
| As (ppm) | 1 | 1 |
| Sb (ppm) | 1 | 1 |
| SiO₂ (ppm) | 85 | 83 |
| CO₂ (%) | 0.031 | 0.058 |
| NH₃ (ppm) | 3 | 9 |
| S total (%) | 0.622 | 0.004 |
| DNT (g/cm³) | 1.29 | 1.24 |
| DT (g/cm³) | 1.82 | 1.70 |
| H₂O 600°C (%) | 0.20 | 0.19 |
| d₅₀ (µm) | 34.2 | 29.0 |
| SSA (m²/g) | 3.7 | 4.0 |
| Porosité (cm³/g) | 0.01 | 0.01 |

| | | |
|---|---|---|
| DT : densité tassée DNT : densité non tassée S.S.A. : Surface spécifique d₅₀ : diamètre moyen des particules O/Mn = rapport oxygène /manganèse H₂O 600°C = eau totale à 600°C | | |

## Revendications

1. Procédé de préparation d'un oxyde mixte de Zn et de Mn, à partir d'une solution de sulfates de manganèse et de zinc, comprenant les étapes de :
- cémentation par addition de zinc en milieu acide à partir de la température ambiante ;
- séparation du cément formé ;
- addition de carbonate ammonique;
- séparation du carbonate mixte précipité ; et
- transformation du carbonate mixte en oxyde mixte.

2. Procédé selon la revendication 1, comprenant en outre avant l'étape d'addition de carbonate ammonique une étape d'ajustement de la teneur en manganèse et en zinc de la solution obtenue à un ratio stoechiométrique de 2.

3. Procédé selon la revendication 1 ou 2, dans lequel l'étape de cémentation comprend deux étapes :
- une première cémentation par addition de zinc en excès molaire supérieur à 4 par rapport à la quantité de métaux à cémenter et
- une deuxième cémentation par addition de zinc en excès molaire inférieur à 4 par rapport à la quantité de métaux à cémenter.

4. Procédé selon la revendication 3, dans lequel l'excès molaire en zinc pendant la première cémentation est supérieur à 6 et de préférence à 7 et l'excès molaire en zinc pendant la deuxième cémentation est inférieure à 3 et de préférence à 2,5.

5. Procédé selon l'une des revendications, précédentes, dans lequel la cémentation est réalisée à un pH inférieur à 5, de préférence compris entre 3.0 et 4,5.

6. Procédé selon l'une des revendications 3 à 5, dans lequel la première cémentation est réalisée à une température supérieure à 70°C, et de préférence entre 85 et 100°C.

7. Procédé selon l'une des revendications 3 à 6, dans lequel la deuxième cémentation est réalisée à une température comprise entre 20 et 65°C, de préférence entre 45 et 65°C.

8. Procédé selon l'une des revendications précédentes, dans lequel l'étape de précipitation est réalisée par addition de carbonate ammonique.

9. Procédé selon l'une des revendications précédentes, comprenant après séparation du carbonate mixte l'étape de précipitation du zinc et du manganèse résiduel contenu dans la solution par addition d'acide phosphorique puis d'acide sulfurique.

10. Procédé selon l'une des revendications précédentes, dans lequel l'étape de transformation du carbonate mixte zinc-manganèse en oxyde mixte est réalisée par calcination oxydante à une température comprise entre 400 et 900°C.

11. Procédé selon la revendication précédente, comprenant en outre l'étape de lavage à l'eau de l'oxyde mixte zinc-manganèse obtenu.

12. Procédé selon l'une des revendications précédentes, dans lequel la solution de sulfates de manganèse et de zinc est obtenue par les étapes de :
- broyage de piles primaires ;
- séparation de la fraction magnétique ;
- séparation des matières plastiques et du papier ; et
- lixiviation de la masse noire obtenue à l'étape précédente à l'acide sulfurique.

13. Procédé selon la revendication précédente, dans lequel la masse noire brute obtenue après séparation des matières plastiques et du papier est soumise, avant lixiviation, à un lavage alcalin suivi d'un lavage à l'eau.

14. Procédé selon la revendication 12 ou 13, dans lequel la lixiviation est réalisée en présence d'un agent réducteur.

15. Procédé selon la revendication 14, dans lequel l'agent réducteur est l'eau oxygénée (H₂O₂), le dioxyde de soufre (SO₂) ou un mélange de gaz nitreux (NOₓ).

16. Procédé selon l'une des revendications 12 à 15, dans lequel la solution de sulfates obtenue après lixiviation est ensuite soumise à une étape visant à séparer le fer et la silice.

17. Procédé selon la revendication précédente, dans lequel l'étape de séparation du fer et de la silice comprend l'abaissement du pH à une valeur comprise entre 4 et 5 à une température comprise entre l'ambiante et 95°C, le cas échéant en présence d'un agent floculant.

18. Procédé de préparation de l'oxyde mixte ZnMn₂O₄ selon l'une des revendications précédentes, dans lequel le rapport molaire Mn/Zn de la solution de sulfate mixte est ajusté à une valeur de 2 avant la précipitation du carbonate.

19. Procédé de préparation de ferrites doux comprenant la préparation d'un oxyde mixte par le procédé selon l'une des revendications précédentes et la transformation de cet oxyde mixte en ferrites doux.

## Claims

1. Process for the preparation of a mixed oxide of Zn and of Mn from a solution of sulphates of manganese and of zinc, comprising the steps of:
- cementation by addition of zinc in an acidic medium starting from ambient temperature;
- separation of the cemented product formed;
- addition of ammonium carbonate;
- separation of the precipitated mixed carbonate; and
- conversion of the mixed carbonate into mixed oxide.

2. Process according to Claim 1, additionally comprising, before the step of addition of ammonium carbonate, a step of adjustment of the content of manganese and of zinc in the solution obtained to a stoichiometric ratio of 2.

3. Process according to Claim 1 or 2, in which the cementation step comprises two steps:
- a first cementation by addition of zinc in a molar excess of greater than 4 with respect to the amount of metals to be cemented, and
- a second cementation by addition of zinc in a molar excess of less than 4 with respect to the amount of metals to be cemented.

4. Process according to Claim 3, in which the molar excess of zinc during the first cementation is greater than 6 and preferably greater than 7 and the molar excess of zinc during the second cementation is less than 3 and preferably less than 2.5.

5. Process according to one of the preceding claims, in which the cementation is carried out at a pH of less than 5, preferably of between 3.0 and 4.5.

6. Process according to one of Claims 3 to 5, in which the first cementation is carried out at a temperature of greater than 70°C and preferably between 85 and 100°C.

7. Process according to one of Claims 3 to 6, in which the second cementation is carried out at a temperature of between 20 and 65°C, preferably between 45 and 65°C.

8. Process according to one of the preceding claims, in which the precipitation step is carried out by addition of ammonium carbonate.

9. Process according to one of the preceding claims, comprising, after separation of the mixed carbonate, the step of precipitation of the residual zinc and manganese present in the solution by addition of phosphoric acid and then of sulphuric acid.

10. Process according to one of the preceding claims, in which the step of conversion of the zinc/manganese mixed carbonate into mixed oxide is carried out by oxidizing calcination at a temperature of between 400 and 900°C.

11. Process according to the preceding claim, additionally comprising the step of washing with water the zinc/manganese mixed oxide obtained.

12. Process according to one of the preceding claims, in which the solution of sulphates of manganese and of zinc is obtained by the steps of:
- grinding the primary batteries;
- separating the magnetic fraction;
- separating the plastics and paper; and
- leaching the black mass obtained in the preceding step with sulphuric acid.

13. Process according to the preceding claim, in which the crude black mass obtained after separation of the plastics and paper is subjected, before leaching, to alkaline washing, followed by washing with water.

14. Process according to Claim 12 or 13, in which the leaching is carried out in the presence of a reducing agent.

15. Process according to Claim 14, in which the reducing agent is aqueous hydrogen peroxide solution (H₂O₂), sulphur dioxide (SO₂) or a mixture of nitrous gases (NOₓ).

16. Process according to one of Claims 12 to 15, in which the sulphates solution obtained after leaching is subsequently subjected to a step for separating the iron and the silica.

17. Process according to the preceding claim, in which the step of separating the iron and the silica comprises the lowering of the pH to a value of between 4 and 5 at a temperature of between ambient temperature and 95°C, if appropriate in the presence of a flocculating agent.

18. Process for the preparation of the mixed oxide ZnMn₂O₄ according to one of the preceding claims, in which the Mn/Zn molar ratio of the mixed sulphate solution is adjusted to a value of 2 before the precipitation of the carbonate.

19. Use of a mixed oxide capable of being obtained according to one of the preceding claims in the preparation of soft ferrites.

## Patentansprüche

1. Verfahren zum Herstellen eines Mischoxids aus Zn und Mn, aus einer Lösung aus Mangan- und Zinksulfaten, das die folgenden Schritte umfasst:
- Auszementieren durch Zugeben von Zink in saurem Medium ab Umgebungstemperatur;
- Abtrennen des gebildeten Zements;
- Zugeben von Ammoniumcarbonat;
- Abtrennen des präzipitierten Mischcarbonats; und
- Umwandeln des Mischcarbonats in Mischoxid.

2. Verfahren nach Anspruch 1, das ferner vor dem Schritt des Zugebens von Ammoniumcarbonat einen Schritt des Anpassens des Mangan- und Zinkgehalts der erhaltenen Lösung auf ein Stöchiometrieverhältnis von 2 umfasst.

3. Verfahren nach Anspruch 1 oder 2, wobei der Schritt des Auszementierens zwei Schritte umfasst:
- ein erstes Auszementieren durch Zugeben von Zink mit einem Molüberschuss von mehr als 4, bezogen auf die Menge der auszuzementierenden Metalle, und
- ein zweites Auszementieren durch Zugeben von Zink mit einem Molüberschuss von weniger als 4, bezogen auf die Menge der auszuzementierenden Metalle.

4. Verfahren nach Anspruch 3, wobei der Molüberschüss an Zink während des ersten Auszementierens größer als 6 und bevorzugt größer als 7 ist und der Molüberschuss an Zink während des zweiten Auszementierens kleiner als 3 und bevorzugt kleiner als 2,5 ist.

5. Verfahren nach einem der vorhergehenden Ansprüche, wobei das Auszementieren bei einem pH-Wert von weniger als 5, bevorzugt im Bereich zwischen 3,0 und 4,5, ausgeführt wird.

6. Verfahren nach einem der Ansprüche 3 bis 5, wobei das erste Auszementieren bei einer Temperatur von mehr als 70°C und bevorzugt zwischen 85 und 100°C ausgeführt wird.

7. Verfahren nach einem der Ansprüche 3 bis 6, wobei das zweite Auszementieren bei einer Temperatur im Bereich zwischen 20 und 65°C, bevorzugt zwischen 45 und 65°C, ausgeführt wird.

8. Verfahren nach einem der vorhergehenden Ansprüche, wobei der Schritt des Präzipitierens durch Zugeben von Ammoniumcarbonat ausgeführt wird.

9. Verfahren nach einem der vorhergehenden Ansprüche, das nach dem Abtrennen des Mischcarbonats den Schritt des Präzipitierens des Zinks und des restlichen Mangans umfasst, das in der Lösung enthalten ist, durch Zugeben von Phosphorsäure, dann Schwefelsäure.

10. Verfahren nach einem der vorhergehenden Ansprüche, wobei der Schritt des Umwandelns des Zink-Mangan-Mischcarbonats zu Mischoxid durch oxidatives Kalzinieren bei einer Temperatur im Bereich zwischen 400 und 900°C ausgeführt wird.

11. Verfahren nach dem vorhergehenden Anspruch, das ferner den Schritt des Waschens mit Wasser des erhaltenen Zink-Mangan-Mischoxids umfasst.

12. Verfahren nach einem der vorhergehenden Ansprüche, wobei die Lösung aus Mangan- und Zinksulfaten durch die folgenden Schritte erhalten wird:
- Zerkleinern von Primärbatterien;
- Abtrennen der magnetischen Fraktion;
- Abtrennen der Plastikmaterialien und des Papiers; und
- Auslaugen der im vorhergehenden Schritt erhaltenen schwarzen Masse mit Schwefelsäure.

13. Verfahren nach dem vorhergehenden Anspruch, wobei die schwarze Rohmasse, die nach Abtrennen der Plastikmaterialien und des Papiers erhalten wurde, vor dem Auslaugen einer alkalischer Wäsche, gefolgt von einer Wäsche mit Wasser unterzogen wird.

14. Verfahren nach Anspruch 12 oder 13, wobei das Auslaugen in Gegenwart eines Reduktionsmittels ausgeführt wird.

15. Verfahren nach Anspruch 14, wobei das Reduktionsmittel Wasserstoffperoxid (H₂O₂), Schwefeldioxid (SO₂) oder ein Gemisch aus Salpetergasen (NO_{X}) ist.

16. Verfahren nach einem der Ansprüche 12 bis 15, wobei die nach dem Auslaugen erhaltene Sulfatlösung anschließend einem Schritt unterzogen wird, der darauf gerichtet ist, das Eisen und das Siliciumdoxid abzutrennen.

17. Verfahren nach dem vorhergehenden Anspruch, wobei der Schritt des Abtrennens des Eisens und des Siliciumdioxids das Absenken des pH-Werts auf einen Wert im Bereich zwischen 4 und 5 bei einer Temperatur im Bereich zwischen Umgebungstemperatur und 95°C, gegebenenfalls in Gegenwart eines Flockungsmittels, umfasst.

18. Verfahren zum Herstellen des Mischoxids ZnMₙ₂O₄ nach einem der vorhergehenden Ansprüche, wobei das Mn/Zn-Molverhältnis der Mischsulfatlösung vor dem Präzipitieren des Carbonats auf einen Wert von 2 angepasst wird.

19. Verfahren zum Herstellen von Weichferriten, das das Herstellen eines Mischoxids durch das Verfahren nach einem der vorhergehenden Ansprüche und das Umwandeln dieses Mischoxids in Weichferrite umfasst.
